# FASCICULE DE BREVET EUROPEEN

(11) **EP 2 949 193 B1**
(45) Date de publication et mention de la délivrance du brevet: **02.10.2019**
(21) Numéro de dépôt: 15168659.9
(22) Date de dépôt: 21.05.2015
(51) Int. Cl.: A01B 49/06

(54) **COMBINAISON D'UN OUTIL PRIMAIRE ET D'UN OUTIL SECONDAIRE ET PROCÉDÉ D'ACCROCHAGE**
KOMBINATION AUS EINEM PRIMÄREN WERKZEUG UND EINEM SEKUNDÄREN WERKZEUG UND KUPPLUNGSVERFAHREN
COMBINATION OF A PRIMARY TOOL AND A SECONDARY TOOL AND METHOD FOR COUPLING

(30) Priorité: 26.05.2014 FR 1454721
(43) Date de publication de la demande: 02.12.2015
(73) Titulaire: KUHN S.A., 67700 Saverne (FR)
(72) Inventeur: Teitgen, Hervé, 57370 PHALSBOURG (FR); Potier, Philippe, 67290 ZITTERSHEIM (FR)
(74) Mandataire: Esch, Esther Evelyne

(56) Documents cités:
- DE-A1- 3 105 641
- DE-A1- 3 636 015
- FR-A1- 2 503 979
- FR-A1- 2 533 408

## Description

La présente invention se rapporte au domaine technique général des machines agricoles. L'invention concerne notamment une combinaison d'un outil primaire et d'un outil secondaire destiné à être accroché sur l'outil primaire au moyen de deux dispositifs de liaison, chaque dispositif de liaison comportant un crochet et un tourillon destiné à être inséré dans le crochet correspondant, l'un des crochets est un crochet avant et l'autre est un crochet arrière compte tenu de la direction d'avance. L'invention concerne également le procédé d'accrochage de l'outil secondaire sur l'outil primaire.

L'utilisation d'une combinaison composée d'une machine de travail du sol sur laquelle est incorporé un semoir est connue. La machine de travail du sol est, par exemple, une herse rotative avec des outils entraînés en rotation autour d'axes verticaux. À l'arrière de ces outils entraînés, est disposé un organe de référence qui permet de contrôler la profondeur de travail. Il s'agit d'un rouleau qui rappuie et complète l'émiettement du sol. Le semoir est incorporé à la herse rotative de manière à constituer un ensemble compact. La fixation du semoir sur la herse rotative est amovible. Le semoir peut donc être dissocié pour permettre l'utilisation de la herse rotative en solo. L'opération d'accrochage du semoir sur la herse rotative n'est pas commode. L'opération se fait durant la marche arrière du tracteur et il faut précisément placer la herse rotative sous le semoir pour que les tourillons puissent s'engager dans les crochets ouverts vers le haut. La position d'alignement des crochets et des tourillons ne se trouve que péniblement en avançant ou en reculant avec le tracteur. Le chauffeur devra parfois descendre plusieurs fois du tracteur afin de constater le décalage en avant ou en arrière et finalement corriger la position pour procéder à l'accrochage du semoir sur la herse rotative. En effet, la visibilité depuis la cabine du tracteur est très limitée.

Pour réduire ce temps d'accrochage, il est courant qu'une seconde personne surveille la manoeuvre et guide le chauffeur afin d'atteindre la position d'alignement plus rapidement. Lorsque la herse rotative est bien positionnée sous le semoir, le chauffeur actionne le relevage du tracteur pour pouvoir engager le tourillon avant du semoir dans le crochet avant. Il devra trouver la bonne position en hauteur du relevage pour que le tourillon soit placé dans le crochet de manière à pouvoir le verrouiller. Le verrouillage devra se faire également de l'autre côté. Puis il actionnera encore le relevage pour engager le tourillon arrière dans le crochet arrière et permettre le verrouillage du dispositif de liaison arrière.

Le document FR 2 533 408 divulgue une combinaison d'un outil primaire équipé d'un système d'articulation en parallélogramme avec deux crochets et d'un outil secondaire disposant d'un attelage trois points avec deux tourillons d'accouplement destinés à être insérés dans les deux crochets. Une tige réalise le point d'attelage supérieur. Les crochets sont disposés au même niveau, il n'y a pas de crochet avant ni de crochet arrière.

La présente invention a pour but de remédier aux inconvénients précités. Elle doit notamment proposer une combinaison dont l'accrochage de l'outil secondaire intégré est plus simple et plus rapide. Un autre objectif de la présente invention est d'assurer un accrochage rapide de l'outil secondaire sur l'outil primaire sans personne auxiliaire.

A cet effet, une importante caractéristique de l'invention consiste en ce que l'un des crochets présente une rampe de positionnement sensiblement horizontale. Grâce à cette caractéristique, l'accrochage de l'outil secondaire sur l'outil primaire est facilité puisque la rampe de positionnement guide directement le tourillon dans le crochet. La rampe de positionnement est dirigée dans la direction d'accrochage de l'outil secondaire sur l'outil primaire. L'utilisateur n'aura alors qu'à reculer jusqu'à ce que le tourillon arrive en butée dans le crochet. Les manipulations pour trouver et engager les tourillons dans les crochets respectifs sont réduites. L'accrochage est rapide.

Selon une autre caractéristique, une rampe de guidage prolonge la rampe de positionnement. Grâce à cette rampe de guidage, le chauffeur peut anticiper le placement en hauteur de l'outil primaire et donc du crochet pour que le tourillon puisse entrer dans le crochet via la rampe de positionnement lors de la marche arrière.

Selon une autre caractéristique de l'invention, la forme en U du crochet a également l'avantage de bloquer le tourillon en translation suivant les deux directions verticales et ainsi de garantir une rotation autour du tourillon pour insérer le second tourillon lors du relevage de l'outil primaire. Lorsque l'outil primaire est aligné latéralement avec l'outil secondaire, l'accrochage se fait donc aisément, rapidement et sans l'intervention d'une personne auxiliaire.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue latérale d'une combinaison d'un outil primaire sur lequel est accroché un outil secondaire selon la présente invention,
- la **figure 2** est une vue latérale au cours de la phase de positionnement de l'outil primaire par rapport à l'outil secondaire,
- la **figure 3** représente une vue latérale lors de l'accrochage de l'outil secondaire sur l'outil primaire,
- la **figure 4** représente une vue de détail de la phase de guidage de l'outil primaire par rapport à l'outil secondaire.

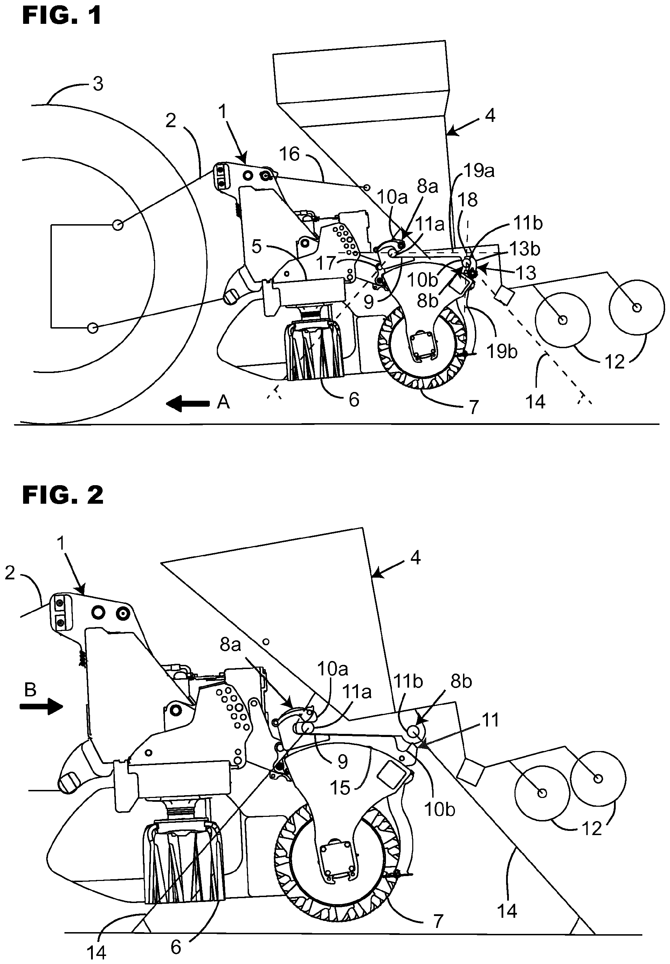

La figure 1 représente la combinaison d'un outil primaire (1), attelé à l'attelage trois points (2), d'un tracteur (3) et d'un outil secondaire (4) destiné à être accroché à l'outil primaire (1). Le tracteur (3) est amené à déplacer et à animer la combinaison d'outils suivant une direction d'avance indiquée par la flèche (A) pour le travail. Dans la suite de la description, les notions suivantes "avant", "arrière" et "devant", "derrière" sont définies par rapport à la direction d'avance (A). L'outil primaire (1) est un outil porté. Il comporte un châssis (5) qui porte des organes de travail (6) et un organe de référence (7). L'organe de référence (7) s'étend derrière les organes de travail (6), il permet de contrôler la profondeur de travail des organes de travail (6). L'outil secondaire (4) est accroché à l'outil primaire (1) au moyen de deux dispositifs de liaison (8a, 8b). La fixation de l'outil secondaire (4) sur l'outil primaire (1) se fait grâce à un dispositif de liaison avant (8a) et un dispositif de liaison arrière (8b). De tels dispositifs de liaison (8a, 8b) sont prévus de chaque côté de la combinaison. Chaque dispositif de liaison (8a, 8b) comporte un crochet (10a, 10b) et un tourillon (11a, 11b). Le tourillon (11a, 11b) est destiné à être inséré dans le crochet (10a, 10b) correspondant. Les crochets (10a, 10b) et les tourillons (11a, 11b) sont des pièces complémentaires. Dans la majorité des cas, l'organe de référence (7) assure également le contrôle de profondeur des dispositifs de travail (12) de l'outil secondaire (4). Le dispositif de liaison avant (8a) et le dispositif de liaison arrière (8b) sont avantageusement écartés l'un de l'autre pour une meilleure stabilité et une réduction des efforts. Dans la description, le crochet (10a, 10b) doit être considéré comme un élément qui permet de recevoir et de fixer un autre élément. Il s'agit d'un crochet d'attelage.

L'outil primaire (1) et l'outil secondaire (4) sont des machines agricoles qu'il est courant d'utiliser en combinaison. L'un effectue une tâche de préparation et l'autre complète et/ou achève le travail. L'outil primaire (1) réalise par exemple la préparation du lit de semences et l'outil secondaire (4) a pour fonction de distribuer un produit dans/ou sur le sol préparé. L'outil primaire (1) s'étend devant l'outil secondaire (4) compte tenu de la direction d'avance (A) pour le travail. L'outil primaire (1) est, par exemple, un outil passif dont les organes de travail (6) ne sont pas animés par la prise de force du tracteur (3) tel qu'un outil à disques ou un outil à dents. Selon un autre exemple, l'outil primaire (1) est une fraise animée ou une herse animée. Dans l'exemple de réalisation représenté sur les figures, l'outil primaire (1) est une herse rotative dont les organes de travail (6) sont animés par la prise de force. L'organe de référence (7), en plus du réglage de la profondeur, rappuie et complète l'émiettement du sol. Il est réalisé par un rouleau. L'outil primaire (1) est donc un outil de reprise superficielle de labour et de préparation de lit de semences. Le faible encombrement d'un tel outil primaire (1) permet de l'associer à un outil secondaire (4) tel qu'une machine de distribution ou un semoir. La combinaison de la herse rotative et du semoir permet d'accomplir différentes tâches lors d'un unique passage sur une parcelle.

A la lumière de la figure 1, l'outil secondaire (4) est fixé à l'aplomb de l'organe de référence (7). Le montage de l'outil secondaire (4) à l'aplomb de l'organe de référence (7) permet de limiter la puissance de relevage nécessaire car le centre de gravité de la combinaison est près du tracteur (3). L'outil primaire (1) porte intégralement l'outil secondaire (4). L'outil secondaire (4) comporte une trémie formant la réserve de graines et des dispositifs de travail (12) dont la fonction est d'implanter de la semence dans le sol préparé. La trémie s'étend au moins partiellement au-dessus de l'organe de référence (7) et les dispositifs de travail (12) s'étendent derrière l'organe de référence (7). La profondeur d'implantation des dispositifs de travail (12) est contrôlée par l'organe de référence (7). L'outil secondaire (4) est ainsi incorporé à l'outil primaire (1) de manière à constituer un ensemble compact et polyvalent. La préparation du sol et le semis sont réalisés en un seul passage, ce qui réduit les temps du chantier, limite les tassements du sol et diminue les coûts de mécanisation.

La fixation de l'outil secondaire (4) sur l'outil primaire (1) est prévue pour être amovible ainsi l'outil primaire (1) peut être utilisé seul. L'outil secondaire (4) est doté de béquilles (14) pour pouvoir être décroché. Les béquilles (14) sont représentées en traits discontinus sur la figure 1, puisqu'elles sont déposées lorsque l'outil secondaire (4) est verrouillé sur l'outil primaire (1).

Selon une importante caractéristique de l'invention, l'un des crochets (10a, 10b) présente une rampe de positionnement (9) sensiblement horizontale. L'un des crochets (10a, 10b) est un crochet avant (10a) et l'autre est un crochet arrière (10b) compte tenu de la direction d'avance (A). L'accrochage de l'outil secondaire (4) sur l'outil primaire (1) est facilité puisque la rampe de positionnement (9) guide directement le tourillon (11a, 11b) dans le crochet (10a, 10b) correspondant. La rampe de positionnement (9) est dirigée essentiellement dans la direction d'accrochage de l'outil secondaire (4) sur l'outil primaire (1). La direction d'accrochage correspond à la marche arrière du tracteur (3) dans la direction (B) qui est dans la direction opposée de la direction d'avance (A). Grâce à la rampe de positionnement (9), le tourillon (11a, 11b) sera guidé vers sa position au fond du crochet (10a, 10b). Les manipulations pour engager le tourillon (11a, 11b) dans le crochet (10a, 10b) respectif sont donc réduites.

Selon une caractéristique de l'invention, l'un des crochets (10a, 10b) présente une forme de U. La rampe de positionnement (9) constitue l'une des branches de la lettre U. Dans l'exemple de réalisation, c'est le crochet (10a) du dispositif de liaison avant (8a) qui comporte la rampe de positionnement (9). Il s'agit donc du crochet avant (10a). Le crochet avant (10a) dispose donc d'une ouverture vers l'arrière. Le crochet avant (10a) a la forme d'un U couché. La rampe de positionnement (9) correspond par exemple à la branche inférieure ou à la branche supérieure du crochet avant (10a). La rampe de positionnement (9) a pour fonction de positionner et donc de guider le tourillon avant (11a) verticalement. La figure 2 illustre l'engagement du tourillon avant (11a) dans le crochet avant (10a) grâce à la rampe de positionnement (9). L'utilisateur n'a donc plus qu'à reculer alors jusqu'à ce que le tourillon avant (11a) arrive en butée dans le crochet avant (10a).

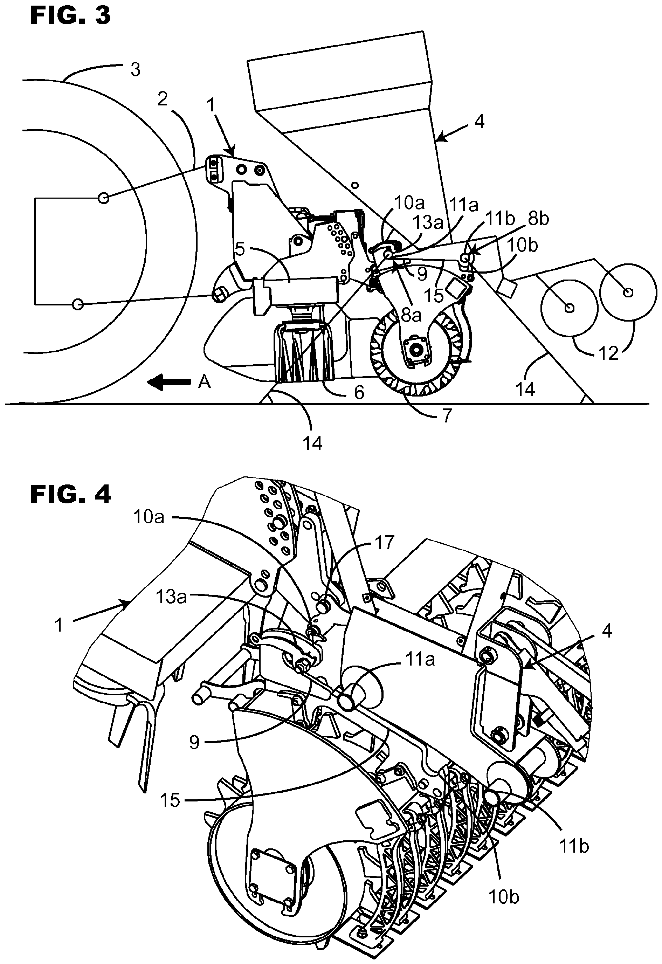

Pour plus de sécurité, il est prévu de verrouiller les crochets (10a, 10b) lorsque les tourillons respectifs (11a, 11b) sont engagés au moyen d'un verrou (13). Le verrouillage peut être réalisé manuellement ou de manière automatique. Un verrouillage à distance peut également être envisagé. De préférence, l'un au moins des crochets (10a, 10b) se verrouille automatiquement lorsque le tourillon (11a, 11b) est inséré dans son crochet correspondant (10a, 10b). La figure 3 illustre la combinaison de l'outil primaire (1) et de l'outil secondaire (4) dans cette position. D'une manière particulièrement avantageuse, le crochet avant (10a) dispose d'un verrou automatique. Le verrou avant (13a) s'ouvre lorsque le tourillon avant (11a) se présente et se referme dès qu'il arrive en butée dans le crochet avant (10a). Le verrou avant (13a) est maintenu en position fermée par un système à ressort ou similaire. Le verrou arrière (13b), tel que représenté sur les figures, se ferme, respectivement s'ouvre, manuellement à l'aide d'une broche. Il est tout à fait possible de prévoir un verrou à fermeture automatique.

D'après les figures, on remarque que le crochet avant (10a) est ouvert vers l'arrière et que le crochet arrière (10b) est ouvert dans une direction verticale. Le crochet arrière (10b) est ouvert vers le haut. Le crochet arrière (10b) appartient à l'outil primaire (1). Le plan passant par le plan médian (19a) de l'ouverture du crochet avant (10a) coupe le plan passant par le plan médian (19b) de l'ouverture du crochet arrière (10b). Selon la figure 1, le plan médian (19a) du crochet avant (10a) se situe dans le milieu du crochet avant (10a) en forme de U. Le plan médian (19a) s'étend à mi-distance entre la branche supérieure et la branche inférieure du U. Les deux plans (représentés en traits discontinus) se coupent selon une droite qui est représentée sur la figure 1 par le point (18). Vu transversalement, ce point (18) doit s'étendre dans l'encombrement en hauteur de la combinaison. Dans un autre exemple de réalisation, le crochet arrière (10b) présente une ouverture vers le bas. Le crochet arrière (10b) est alors prévu sur l'outil secondaire (4) et le tourillon arrière (11b) sur l'outil primaire (1).

Dans l'exemple représenté, la rampe de positionnement (9) du crochet avant (10a) est double puisque le positionnement est réalisé par la branche inférieure et la branche supérieure. Pour que l'engagement soit plus aisé, l'extrémité de la branche supérieure est légèrement écartée de l'extrémité de la branche inférieure. Lorsque le tourillon avant (11a) est positionné dans le crochet avant (10a), la translation suivant les deux directions verticales est bloquée. L'utilisateur n'a donc plus qu'à relever l'outil primaire (1) via l'attelage trois points (2) pour engager le tourillon arrière (11b) dans le crochet arrière (10b). Étant donné que les mouvements de translation dans la direction verticale sont bloqués, l'outil secondaire (4) pivote autour du tourillon avant (11a) lors du relevage. Pour faciliter l'engagement du tourillon arrière (11b) dans le crochet arrière (10b), ce dernier dispose d'une ouverture en V. Pour que le pivotement se fasse dans le bon sens autour du tourillon avant (11a), il est nécessaire que le centre de gravité de l'outil secondaire (4) s'étende à l'opposé du dispositif de liaison avant (8a), c'est-à-dire au niveau du crochet arrière (10b). De préférence, le centre de gravité s'étend sur le plan vertical, perpendiculaire à la direction d'avance (A), passant par le crochet arrière (10b) ou à l'arrière de ce plan vertical.

D'une manière avantageuse, le crochet avant (10a) et le crochet arrière (10b) s'étendent dans un même plan vertical parallèle à la direction d'avance (A). Dans une alternative, le crochet avant (10a) est décalé latéralement par rapport au crochet arrière (10b).

Selon une autre importante caractéristique, une rampe de guidage (15) prolonge la rampe de positionnement (9). Grâce à la rampe de guidage (15), l'utilisateur peut anticiper le placement en hauteur de l'outil primaire (1) et donc du crochet avant (10a) pour que le tourillon avant (11a) puisse entrer dans le crochet avant (10a) via la rampe de positionnement (9) lors de la marche arrière. L'accrochage est donc encore facilité. La rampe de guidage (15) s'étend entre le crochet avant (10a) et le crochet arrière (10b). La longueur de la rampe de guidage (15) correspondant au moins au tiers de la distance entre le crochet avant (10a) et le crochet arrière (10b). Dans l'exemple représenté sur la figure 4, le tourillon avant (11a) glisse sur la rampe de guidage (15) pour arriver au cours de la marche arrière du tracteur (3) sur la rampe de positionnement (9) et finalement au fond du crochet avant (10a). Les béquilles (14) ne sont pas représentées sur cette figure. La rampe de guidage (15) est rectiligne. Elle est sensiblement horizontale avec une légère inclinaison vers le bas. Selon une alternative non représentée, la rampe de guidage (15) est incurvée de préférence de forme concave. A la lumière des figures, on constate que le crochet arrière (10b) s'étend en dessous de la rampe de guidage (15) et que le crochet avant (10a) s'étend sensiblement au-dessus de la rampe de guidage (15).

En pratique, l'accrochage de l'outil secondaire (4) sur l'outil primaire (1) se déroule en plusieurs étapes. La figure 1 représente l'outil secondaire (4) ou le semoir accroché à l'outil primaire (1) ou à la herse rotative. L'attelage trois points (2) du tracteur (3) est représenté dans sa position relevée. Dans la première étape, l'outil primaire (1) est attelé au tracteur (3) et l'outil secondaire (4) repose au sol par l'intermédiaire des béquilles (14). Pour favoriser l'engagement du tourillon avant (11a) dans le crochet avant (10a) lors de la marche arrière, l'outil secondaire (4) est incliné vers l'avant. Ainsi, lorsque l'outil secondaire (4) est placé sur ses béquilles (14), le tourillon arrière (11b) est décalé vers le haut par rapport au tourillon avant (11a). Dans la deuxième étape, l'utilisateur effectue une marche arrière, dans la direction (B), afin de présenter l'outil primaire (1) sous l'outil secondaire (4). Il recule en alignant, dans une direction transversale à la direction (B), l'outil primaire (1) avec l'outil secondaire (4). La structure support de l'outil secondaire (4) comporte de part et d'autre des guides à cet effet. L'attelage trois points (2) est placé de manière à ce que l'outil primaire (1) soit suffisamment relevé pour ne pas toucher le sol et suffisamment abaissé pour passer sous l'outil secondaire (4). Lorsque l'outil primaire (1), notamment l'organe de référence (7), arrive sous l'outil secondaire (4), il faut engager le tourillon avant (11a) dans le crochet avant (10a) via la rampe de positionnement (9). Lorsque le tourillon avant (11a) arrive en butée dans le crochet avant (10a), le tracteur arrête de reculer. De préférence, la position du tourillon avant (11a) est alors verrouillée automatiquement dans le crochet avant (10a). L'utilisateur peut anticiper l'adaptation en hauteur de l'outil primaire (1) par rapport à l'outil secondaire (4) grâce à la rampe de guidage (15). Durant cette deuxième étape, l'outil secondaire (4) reste appuyé au sol avec les béquilles (14).

Dans la troisième étape, l'utilisateur va soulever l'outil primaire (1) pour engager le tourillon arrière (11b) dans le crochet arrière (10b). L'attelage trois points (2) est actionné jusqu'à ce que l'outil secondaire (4) soit soulevé, c'est-à-dire que les béquilles (14) soient décollées du sol et peuvent être retirées. Pour une meilleure sécurité durant cette étape, il est recommandé de verrouiller le crochet avant (10a) pour garantir la rotation de l'outil secondaire (4) autour du tourillon avant (11a).

Dans la dernière étape, il y a lieu de verrouiller le tourillon arrière (11b) dans le crochet arrière (10b). Ce verrouillage se fait manuellement via le verrou arrière (13b) de chaque côté de l'outil secondaire (4).

Dans l'exemple de réalisation représenté sur les figures, l'outil secondaire (4) est un semoir en lignes et l'outil primaire (1) est une herse rotative avec des rotors équipés de deux dents. L'organe de référence (7) est un rouleau dont la fonction est de rappuyer le sol et de contrôler la profondeur de travail des dents. Dans le cas spécifique du montage fixe du semoir sur l'organe de référence (7), il est nécessaire d'articuler l'ensemble rouleau-semoir par rapport au châssis de la herse rotative. Le rouleau est lié au châssis de la herse rotative par l'intermédiaire de deux bras latéraux. La partie supérieure du semoir est liée à la herse rotative via une bielle (16). L'étape suivante est de retirer la broche (17) pour libérer le parallélogramme formé par la bielle (16) et par le bras de rouleau. D'une manière avantageuse, cette broche (17) est utilisée pour verrouiller le crochet arrière (10b). Pour l'accrochage du semoir sur la herse rotative, les étapes décrites préalablement sont respectées, certaines sont ajoutées pour le bon fonctionnement du semoir intégré. Ainsi, à la fin de la deuxième étape, il est prévu de fixer la bielle (16) de l'outil secondaire (4) sur l'outil primaire (1). Cette bielle (16) est réalisée sous la forme d'une bielle d'attelage ou d'un vérin hydraulique. Puis, il faut retirer la broche (17) pour que le semoir soit articulé sur la herse rotative. Le montage du semoir est fixe sur l'organe de référence (7). La broche (17) qui a été retirée du bras du rouleau permettra de réaliser la dernière étape, c'est-à-dire de verrouiller le dispositif de liaison arrière (8b). Il va de soi que la broche (17) est retirée de chaque bras du rouleau.

Dans une alternative non représentée, l'outil secondaire (4) est un semoir monograine ou un épandeur.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Combinaison d'un outil primaire (1) et d'un outil secondaire (4) destiné à être accroché sur l'outil primaire (1) au moyen de deux dispositifs de liaison (8a, 8b), chaque dispositif de liaison (8a, 8b) comportant un crochet (10a, 10b) et un tourillon (11a, 11b) destiné à être inséré dans le crochet (10a, 10b) correspondant, l'un des crochets (10a, 10b) est un crochet avant (10a) et l'autre est un crochet arrière (10b) compte tenu de la direction d'avance (A), ***caractérisée en ce que*** le crochet avant (10a) dispose d'une ouverture vers l'arrière et présente une rampe de positionnement (9) sensiblement horizontale et que le crochet arrière (10b) présente une ouverture dirigée de manière à ce que le plan passant par le plan médian (19b) de l'ouverture du crochet arrière (10b) coupe le plan passant par le plan médian (19a) de l'ouverture du crochet avant (10a).

2. Combinaison selon la revendication 1, ***caractérisée en ce que*** l'un des crochets (10a, 10b) présente une forme de U, la rampe de positionnement (9) constitue l'une des branches du U et l'ouverture est dirigée vers l'arrière.

3. Combinaison selon la revendication 1 ou 2, **caractérisée en ce que** l'orientation des ouvertures des crochets (10a, 10b) est telle que la droite de coupe s'étend dans l'encombrement en hauteur de la combinaison.

4. Combinaison selon l'une quelconque des revendications 1 à 3, **caractérisée en ce que** le crochet avant (10a) et le crochet arrière (10b) s'étendent dans un même plan vertical parallèle à la direction d'avance (A).

5. Combinaison selon l'une quelconque des revendications 1 à 4, **caractérisée en ce qu'**au moins un des crochets (10a, 10b) se verrouille automatiquement lorsque le tourillon (11a, 11b) est inséré dans le crochet (10a, 10b) correspondant.

6. Combinaison selon l'une quelconque des revendications 1 à 5, **caractérisée en ce qu'**une rampe de guidage (15) prolonge la rampe de positionnement (9).

7. Combinaison selon la revendication 6, **caractérisée en ce que** la rampe de guidage (15) est sensiblement horizontale ou inclinée.

8. Combinaison selon la revendication 6, **caractérisée en ce que** la rampe de guidage (15) est incurvée.

9. Procédé d'accrochage de l'outil secondaire (4) sur l'outil primaire (1) selon la revendication 1, **caractérisé en ce que** l'accrochage est réalisé en plusieurs étapes :
- la première étape consiste à atteler l'outil primaire (1) au tracteur (3) ;
- la deuxième étape consiste à réaliser, en marche arrière dans la direction (B), un alignement dans la direction transversale à la direction (B) de l'outil primaire (1) par rapport à l'outil secondaire (4) ainsi qu'un alignement pour engager le tourillon avant (11a) dans le crochet avant (10a) ;
- la troisième étape consiste à relever l'outil primaire (1) pour que le tourillon arrière (11b) se place dans le crochet arrière (10b), et
- la quatrième étape consiste à verrouiller le crochet arrière (10b).

10. Procédé d'accrochage selon la revendication 9, **caractérisé en ce que** le crochet avant (10a) est verrouillé avant de réaliser la troisième étape.

## Patentansprüche

1. Kombination aus einem Hauptwerkzeug (1) und einem Nebenwerkzeug (4), das dazu bestimmt ist, an das Hauptwerkzeug (1) mittels zweier Verbindungsvorrichtungen (8a, 8b) gekuppelt zu werden, wobei jede Verbindungsvorrichtung (8a, 8b) einen Haken (10a, 10b) und einen Drehzapfen (11a, 11b) umfasst, der dazu bestimmt ist, in den entsprechenden Haken (10a, 10b) eingefügt zu werden, wobei einer der Haken (10a, 10b) ein Vorderhaken (10a) ist und der andere ein Hinterhaken (10b) ist, unter Berücksichtigung der Arbeitsrichtung (A), ***dadurch gekennzeichnet, dass*** der Vorderhaken (10a) über eine Öffnung nach hinten verfügt und eine im Wesentlichen horizontale Positionierschiene (9) aufweist und dass der Hinterhaken (10b) eine Öffnung aufweist, die so gerichtet ist, dass sich die Ebene, die durch die Mittelebene (19b) der Öffnung des Hinterhakens (10b) verläuft, mit der Ebene schneidet, die durch die Mittelebene (19a) der Öffnung des Vorderhakens (10a) verläuft.

2. Kombination nach Anspruch 1, ***dadurch gekennzeichnet, dass*** einer der Haken (10a, 10b) eine U-Form aufweist, die Positionierschiene (9) einen der Schenkel des U bildet und die Öffnung nach hinten gerichtet ist.

3. Kombination nach Anspruch 1 oder 2, ***dadurch gekennzeichnet, dass*** die Ausrichtung der Öffnungen der Haken (10a, 10b) derartig ist, dass sich die Schnittgerade in der Höhenabmessung der Kombination erstreckt.

4. Kombination nach irgendeinem der Ansprüche 1 bis 3, ***dadurch gekennzeichnet, dass*** sich der Vorderhaken (10a) und der Hinterhaken (10b) in einer gleichen Vertikalebene parallel zur Arbeitsrichtung (A) erstrecken.

5. Kombination nach irgendeinem der Ansprüche 1 bis 4, ***dadurch gekennzeichnet, dass*** sich mindestens einer der Haken (10a, 10b) automatisch verriegelt, wenn der Drehzapfen (11a, 11b) in den entsprechenden Haken (10a, 10b) eingefügt wird.

6. Kombination nach irgendeinem der Ansprüche 1 bis 5, ***dadurch gekennzeichnet, dass*** die Positionierschiene (9) von einer Führungsschiene (15) verlängert wird.

7. Kombination nach Anspruch 6, ***dadurch gekennzeichnet, dass*** die Führungsschiene (15) im Wesentlichen horizontal oder geneigt ist.

8. Kombination nach Anspruch 6, ***dadurch gekennzeichnet, dass*** die Führungsschiene (15) gekrümmt ist.

9. Kupplungsverfahren des Nebenwerkzeugs (4) auf dem Hauptwerkzeug (1) nach Anspruch 1, ***dadurch gekennzeichnet, dass*** die Kupplung in mehreren Schritten ausgeführt wird:
- der erste Schritt besteht darin, das Hauptwerkzeug (1) an den Schlepper (3) zu kuppeln;
- der zweite Schritt besteht darin, im Rückwärtsgang in Richtung (B) eine Ausrichtung, in der Richtung quer zur Richtung (B) des Hauptwerkzeugs (1) in Bezug auf das Nebenwerkzeug (4), sowie eine Ausrichtung auszuführen, damit der vordere Drehzapfen (11a) in den Vorderhaken (10a) eingreift;
- der dritte Schritt besteht darin, das Hauptwerkzeug (1) anzuheben, damit sich der hintere Drehzapfen (11b) im Hinterhaken (10b) anordnet, und
- der vierte Schritt besteht darin, den Hinterhaken (10b) zu verriegeln.

10. Kupplungsverfahren nach Anspruch 9, ***dadurch gekennzeichnet, dass*** der Vorderhaken (10a) verriegelt wird, bevor der dritte Schritt ausgeführt wird.

## Claims

1. Combination of a primary tool (1) and a secondary tool (4) designed to be hitched to the primary tool (1) by means of two connecting devices (8a, 8b), each connecting device (8a, 8b) including a hook (10a, 10b) and a stud (11a, 11b) designed to be inserted into the corresponding hook (10a, 10b), one of the hooks (10a, 10b) being a front hook (10a) and the other a rear hook (10b) given the direction of advance (A), ***characterised in that*** the front hook (10a) has an opening towards the rear and has a substantially horizontal positioning rail (9) and that the rear hook (10b) has an opening directed such that the plane passing through the median plane (19b) of the opening of the rear hook (10b) crosses the plane passing through the median plane (19a) of the opening of the front hook (10a).

2. Combination according to claim 1, ***characterised in that*** one of the hooks (10a, 10b) is U-shaped, the positioning rail (9) being one of the legs of the U and the opening facing towards the rear.

3. Combination according to claim 1 or 2, ***characterised in that*** the orientation of the openings of the hooks (10a, 10b) is such that the cutting line extends within the upward bulk of the combination.

4. Combination according to any one of the claims 1 to 3, ***characterised in that*** the front hook (10a) and the rear hook (10b) extend in a same vertical plane parallel to the direction of advance (A).

5. Combination according to any one of the claims 1 to 4, ***characterised in that*** at least one of the hooks (10a, 10b) automatically locks when the stud (11a, 11b) is inserted into the corresponding hook (10a, 10b).

6. Combination according to any one of the claims 1 to 5, ***characterised in that*** a guide rail (15) extends the positioning rail (9).

7. Combination according to claim 6, ***characterised in that*** the guide rail (15) is substantially horizontal or tilted.

8. Combination according to claim 6, ***characterised in that*** the guide rail (15) is curved.

9. Method for coupling the secondary tool (4) to the primary tool (1) according to claim 1, ***characterised in that*** the hitching is performed in several steps:
- the first step consists of hitching the primary tool (1) to the tractor (3);
- the second step consists of carrying out, when reversing in the direction (B), an alignment in the direction crossing the direction (B) of the primary tool (1) relative to the secondary tool (4), as well as an alignment to engage the front stud (11a) in the front hook (10a);
- the third step consists of raising the primary tool (1) so that the rear stud (11b) places in the rear hook (10b), and
- the fourth step consists of locking the rear hook (10b).

10. Hitching method according to claim 9, ***characterised in that*** the front hook (10a) is locked before performing the third step.
